**Europäisches Patentamt**

**European Patent Office**

**Office européen des brevets**

(19)

(11) Veröffentlichungsnummer: **0 200 000**
**B1**

(12) # EUROPÄISCHE PATENTSCHRIFT

(45) Veröffentlichungstag der Patentschrift:
**04.01.89**

(51) Int. Cl.⁴: **B65G 65/32, B65G 65/36**

(21) Anmeldenummer: **86104292.7**

(22) Anmeldetag: **27.03.86**

(54) **Einrichtung zur Schüttgutförderung in Silos.**

(30) Priorität: **25.04.85 DE 3514888**

(43) Veröffentlichungstag der Anmeldung:
**10.12.86 Patentblatt 86/45**

(45) Bekanntmachung des Hinweises auf die Patenterteilung:
**04.01.89 Patentblatt 89/1**

(84) Benannte Vertragsstaaten:
**AT BE CH DE FR GB IT LI LU NL SE**

(56) Entgegenhaltungen:
**CH-A- 430 583**
**DE-C- 831 519**
**GB-A- 1 146 938**
**US-A- 3 075 657**

(73) Patentinhaber: **Schade Fördertechnik GmbH & Co., Am Rosenplätzchen 120, D-4600 Dortmund 1(DE)**

(72) Erfinder: **Ströcker, Günter, Natorper Strasse 18, D-4757 Holzwickede Kr. Unna(DE)**

(74) Vertreter: **Vollbach, Hans, Dipl.-Ing. et al, Patentanwälte Dipl.-Ing. Buschhoff Dipl.Ing Hennicke Dipl.-Ing. Vollbach Kaiser-Wilhelm-Ring 24, D-5000 Köln 1(DE)**

## Beschreibung

Die Erfindung betrifft eine Einrichtung zur Schüttgutförderung in Silos, mit einer das einzuspeichernde Schüttgut in das Silo abwerfenden Beschickungsvorrichtung, mit einer das Schüttgut aus dem Silo ausspeichernden Ausspeichervorrichtung, die ein auf der Oberfläche des Schüttguthaufens arbeitendes, mittels eines Drehantriebs um die Siloachse drehbares Räumgerät aufweist, das über ein mittig im Silo angeordnetes Drehglied an einem mittels eines Hubwerks im Silo heb- und senkbaren, an einer Vertikalführung drehschlüssig geführten Führungsglied gelagert ist, und mit einem im Silo angeordneten Teleskop-Fallrohr, das am oberen Ende mit einem Schüttgut-Einlauf für das vom Räumgerät zugeförderte Schüttgut versehen ist und mit dem Führungsglied und dem Räumgerät so gekoppelt ist, dass es deren Hubbewegungen durch teleskopartiges Ein- und Ausschieben folgt.

Für die Schüttgut-Speicherung in Silos großer Speicherkapazität werden in der Praxis Silos verwendet, die einen feststehend im Silo angeordneten Abzugsschacht aufweisen, um dessen Achse das Räumgerät schwenkt und der zugleich zur Führung des Räumgerätes bei seinen Auf- und Abwärtsbewegungen dient (DE-A 1 933 347, DE-A 1 456 866, DE-U 1 968 164, DE-C 3 135 439, DE-C 3 151 841, US-A 3 358 856, US-A 2 649 215, US-A 772 911). Bei den vorgenannten Einrichtungen weist der Abzugsschacht über seine Länge und seinen Umfang verteilt eine Vielzahl an Schüttgut-Einlauföffnungen auf. Als Räumgeräte werden Kratzausleger, Eimerketten, Förderschnecken, Räumräder u.dgl. verwendet. Die Anordnung eines zentralen Abzugsschachtes, der zugleich zur Führung des Räumgerätes dient, führt zu verhältnismäßig schweren und aufwendigen Konstruktionen und außerdem bei Speichergütern, die zum Kleben und Verdichten neigen, wie z.B. Gips, zu Schwierigkeiten bei der Ausspeicherarbeit.

Bei Silos kleinerer Speicherkapazitäten, die z.B. zur Aufnahme von Gärfutter dienen, ist es seit langem bekannt, für den Abzug des Speichergutes aus dem Silo ein zentral im Schüttguthaufen stehendes Teleskop-Fallrohr vorzusehen. Hierbei ist das um die Siloachse schwenkbare Räumgerät am oberen Ende des Teleskop-Fallrohres gelagert und mittels Reibräder, die sich an der zylindrischen Silowand abwälzen, schwenkbar (DE-B 1 250 360). In diesem Zusammenhang ist für Silos, die der Speicherung von Eisstücken dienen, eine Einrichtung der gattungsgemäßen Art bekanntgeworden, bei der das um die Siloachse kreisende, auf der Oberfläche des Schüttguthaufens arbeitende Räumgerät an einem Führungsglied in Gestalt einer Führungsbüchse gelagert ist, die mit Hilfe des Hubwerks im Silo heb- und senkbar ist (DE-C 831 519). Die Verbindung des Räumgerätes mit der Führungsbüchse erfolgt hier über ein Drehglied, welches von dem oberen Rohrschuß des Teleskop-Fallrohres gebildet wird. Das Drehglied ist an der Führungsbüchse in dem von einem Ringkeil gebildeten Drehlager drehbar gelagert. Die Führungsbüchse ist an einer von einem Standrohr gebildeten Vertikalführung über eine Längskeilführung drehschlüssig geführt. Das Standrohr durchgreift das Teleskop-Fallrohr.

Einrichtungen der vorgenannten Art, die für den Schüttgutabzug mit einem Teleskop-Fallrohr ausgestattet sind, haben sich in der Praxis für Schüttgutsilos größerer Speicherkapazitäten nicht durchsetzen können. Soweit das Teleskop-Fallrohr durch ein feststehendes Standrohr geführt wird, ergibt sich hierdurch ein beträchtlich erhöhter Konstruktionsaufwand, zugleich aber auch der Nachteil, daß der Förderquerschnitt des Teleskop-Fallrohres durch das in ihm stehende Standrohr stark eingeengt und durch die Führung der Einzelrohre am Standrohr der Einschubwiderstand des Teleskop-Fallrohres ungünstig erhöht wird. Bei Verwendung eines freitragend angeordneten Teleskop-Fallrohres, das also keine Führung durch ein innenliegendes Standrohr erhält und bei dem statt dessen das Räumgerät mit Stützrollen an der zylindrischen Silowand abgestützt wird (DE-B 1 250 360), ist eine zuverlässige Vertikalführung des Teleskop-Fallrohres schon deshalb nicht gewährleistet, weil konstruktionsbedingt zur Silowand hin ein größeres Radialspiel des Räumgerätes gegeben ist und das mit den angetriebenen Reibrädern auf dem Schüttguthaufen laufende Räumgerät unvermeidlich Schrägstellungen erfährt und daher im Betrieb Taumelbewegungen ausführt, die zu Verkantungen der Rohre des Teleskop-Fallrohres und damit zu einem Versagen der Anlage führen.

Bei Silos kleiner Speicherkapazitäten, die im landwirtschaftlichen Bereich als Heusilo oder als Gärsilo für Grünfutter dienen, ist es auch bekannt, das um die Siloachse schwenkbare Räumgerät an einem Brückenträger in Gestalt eines Hubrahmens zu lagern, der sich mit seinen Enden mittels Laufrollen in vertikalen Schienen an der Silowand führt und abstützt, so daß er keine Drehbewegungen im Silo ausführen kann (CH-A 430 583). Bei dieser Einrichtung ist kein Teleskop-Fallrohr für den Schüttgutabzug vorgesehen. Vielmehr muß hier in der gespeicherten Schüttgutmasse ein unverbauter Vertikalschacht angelegt werden, durch den hindurch das vom Räumgerät zugeförderte Schüttgut zum Siloboden hin abgefördert wird. Der Schwenkantrieb für das Räumgerät ist auch hier als Reibradantrieb ausgebildet, dessen am freien Ende des Räumarmes angeordnetes, vom Räumbandantrieb angetriebenes Reibrad sich in Nähe der Silowand an einer Führungsschiene des sternförmigen Hubrahmens abstützt.

Aufgabe der Erfindung ist es, eine Einrichtung der eingangs genannten Art, die bevorzugt für die Speicherung körniger Schüttstoffe in Großsilos bestimmt ist, so auszubilden, daß das in der Schüttgutmasse stehende Teleskop-Fallrohr eine gute Führung und Abstützung im Silo erhält und die Betriebskräfte ohne ungünstige Beanspruchung des Teleskop-Fallrohres auf möglichst kurzem Wege zur Silowand hin sicher abgesetzt werden können, wobei in bevorzugter Ausführung auch ein verminderter Bauaufwand bei hoher Leistungsfähigkeit der Einrichtung und bessere Zugänglichkeit derselben angestrebt wird.

Die vorgenannte Aufgabe wird bei einer Einrichtung der eingangs genannten gattungsgemäßen Art erfindungsgemäß durch folgende Merkmale gelöst:

- Das Führungsglied für das Teleskop-Fallrohr besteht aus einem sich quer durch das Silo erstreckenden Brückenträger, der sich an seinen Enden an den an der Silowand angeordneten Vertikalführungen drehschlüssig führt;
- Der Drehantrieb ist am Brückenträger angeordnet und treibt das an der Unterseite des Brückenträgers angeordnete Räumgerät über das Drehglied an.

Bei der erfindungsgemäßen Einrichtung bildet der Brückenträger das tragende Rückgrat der Ausspeichervorrichtung und zweckmäßig auch der zur Schüttgut-Einspeicherung vorgesehenen Beschickungsvorrichtung. Da der Brückenträger durch die Vertikalführungen der Silowand gegen Drehbewegung abgestützt und in Hubrichtung geführt ist, können die Betriebskräfte des um die Siloachse schwenkenden bzw. drehenden Räumgerätes über den Brückenträger auf kurzem Wege gegen die Vertikalführungen und damit auf die Silowand zuverlässig abgesetzt werden. Das Teleskop-Fallrohr wird von den Betriebskräften nicht belastet und erhält durch seine Anbindung an dem geführten Brückenträger eine zuverlässige Abstützung, Zentrierung und Führung im Silo. Damit werden auch Schrägstellungen und Verkantungen der einzelnen Rohre des Teleskop-Fallrohres bei den Ein- und Ausschubbewegungen desselben zuverlässig vermieden. Ein im Teleskop-Fallrohr angeordnetes Standrohr der bekannten Art wird nicht benötigt. Vielmehr kann ein von den Förderquerschnitt einengenden Einbauten freibleibendes Teleskop-Fallrohr Verwendung finden. Damit ergibt sich ein erheblich verminderter Bauaufwand. Über das Teleskop-Fallrohr läßt sich der Schüttgutaustrag auch dann noch durchführen, wenn im Silo zum Kleben und zur Verfestigung neigendes Schüttgut, z.B. Gips oder im Verhalten ähnliches Schüttgut, gespeichert wird. Über den Brückenträger ist auch eine bessere Zugänglichkeit der mit ihm verbundenen Vorrichtungen erreichbar. Für die vorgenannten Vertikalführungen des Brückenträgers werden zweckmäßig an der Silowand Führungsschienen angeordnet, an denen sich der Brückenträger mit Führungsschuhen führt. Damit gelingt es auch, das obere Ende des Teleskop-Fallrohres mit geringem Radialspiel exakt vertikal zu führen. Zugleich wird durch das Gewicht des Brückenträgers und der hier angeordneten Vorrichtungen die Kraft erhöht, die bei der Ausspeicherarbeit den sicheren Einschub des Teleskop-Fallrohres gegen die Haft- und Reibungswiderstände des Schüttguts bewirkt. Vorteilhaft ist ferner, daß das an der Unterseite des Brückenträgers angeordnete Räumgerät stets in einer definierten Arbeitsebene arbeitet, so daß Schrägstellungen und Taumelbewegungen des Räumgerätes vermieden und auch konstante Ausspeicherleistungen erreichbar sind. Der Brückenträger bildet zugleich den Träger des Drehantriebs. Das Schwenkwerk des Räumgerätes mit dem Drehglied kann am Brückenträger mittig, d.h. im Bereich der Siloachse angeordnet werden.

Bei der erfindungsgemäßen Einrichtung kann der Brückenträger, wie erwähnt, in vorteilhafter Weise zugleich Träger der zur Schüttgut-Einspeicherung vorgesehenen Beschickungsvorrichtung bzw. einer Schüttgut-Verteilervorrichtung sein, mit der das einzuspeichernde Schüttgut im Silo verteilt wird. Dabei läßt sich die Anordnung mit Vorteil z.B. so treffen, daß das von der Verteilervorrichtung in das Silo abgeworfene Schüttgut mit Hilfe des Räumgerätes, das dabei in seiner Arbeitsrichtung reversiert werden kann, mehr oder weniger gleichmäßig über den Siloquerschnitt verteilt wird. Bei einer bevorzugten Ausführungsform der Erfindung wird die Anordnung so getroffen, daß der Brückenträger eine Schüttgut-Verteilervorrichtung trägt, wobei zwischen dem Abwurfende eines der Oberseite des Silos angeordneten Einspeicherförderers und dem Brückenträger ein an seinem unteren Ende mit dem Brückenträger verbundenes zentrales Einspeicher-Teleskoprohr angeordnet wird, welches den Auf- und Abwärtsbewegungen des Brückenträgers durch teleskopartiges Ein- und Ausschieben zu folgen vermag. Damit wird auch eine zuverlässige zentrale Zuführung des einzuspeichernden Schüttgutes verwirklicht, so daß dieses von der Silomitte her über den Siloquerschnitt verteilt werden kann. Die genannte Schüttgut-Verteilervorrichtung kann am Brückenträger selbst oder bei einer vorteilhaften Ausführungsform auch an dem vom Brückenträger getragenen Drehglied angeordnet werden, so daß sie von dem Drehglied um die Siloachse geschwenkt und für die Drehbewegung des Räumgerätes und der Verteilervorrichtung nur ein einziger Schwenkantrieb benötigt wird. Für die Schüttgut-Verteilervorrichtung kann dabei ein Abwurfförderer, im allgemeinen ein Verteilerband od. dgl., z.B. ein Gurt- oder Plattenband, verwendet werden. Die Verteilervorrichtung bzw. das Verteilerband od.dgl. führt demgemäß beim Einspeichern des Schüttguts eine Schwenkbewegung aus, wodurch das Schüttgut auf einer ringförmigen Bahn abgeworfen wird. Anstelle des vorgenannten Verteilerbandes od.dgl. kann an dem Brückenträger aber auch ein Schrägabweiser od.dgl. vorgesehen werden. Auch in diesem Fall kann das vorgenannte Einspeicher-Teleskoprohr vorgesehen werden.

Das Teleskop-Fallrohr wird, wie erwähnt, mit dem Brückenträger verbunden, vorzugweise dadurch, daß es an dem am Brückenträger gelagerten Drehglied angeschlossen wird. Die Verbindung des Teleskop-Fallrohrs mit dem Brückenträger bzw. dem das Räumgerät tragenden Drehglied kann hierbei über eine Drehkupplung geschehen, so daß der obere Rohrschuß des Teleskop-Fallrohrs an der Drehbewegung des Drehgliedes nicht teilnimmt.

Für das Räumgerät können unterschiedliche Vorrichtungen verwendet werden, die auch so ausgebildet sein können, daß durch Reversieren ihrer Arbeitsrichtung das in das Silo abgeworfene Schüttgut wahlweise nach außen in Richtung auf die Silowand oder nach innen in Richtung auf das Teleskop-Fallrohr befördert werden kann, so daß sich beim Einspeichern eine gleichmäßige Verteilung des aufgegebenen Schüttguts über den Siloquerschnitt bei ebener Schüttgut-Oberfläche erreichen läßt.

Dies erlaubt eine volle Ausnutzung der Speicherkapazität des Silos und ermöglicht außerdem eine rasche Umschaltung von Ein- auf Ausspeichern und umgekehrt.

Als Räumgerät wird mit Vorteil ein Kratzausleger verwendet werden, der an dem über die Drehverbindung mit dem Brückenträger verbundenen, angetriebenen Drehglied angeordnet ist. Es können auch zwei diametral einander gegenüberliegende Kratzausleger vorgesehen werden, um einen Gewichtsausgleich und hohe Ausspeicherleistungen zu erzielen. Der oder die Kratzausleger werden zweckmäßig in einem Gelenk begrenzt höhenverschwenkbar mit dem Drehglied verbunden. Dabei wird vorteilhafterweise eine Schaltvorrichtung od.dgl. vorgesehen, die bei einem vorgegebenen maximalen Schwenkwinkel von z.B. 5° bis 8° des Kratzauslegers ein Signal liefert. Ausschwenkbewegungen des oder der Kratzausleger nach oben ergeben sich vor allem bei übermäßigen Verfestigungen des eingespeicherten Schüttguts, d.h. dann, wenn bei gegebener Absenkgeschwindigkeit des Kratzauslegers dessen Förderleistung zu gering ist. Um hier schwerwiegende Beschädigungen durch Überbeanspruchungen zu vermeiden, wird mit Hilfe der vorgenannten Schaltvorrichtung bei einem vorgegebenen Schwenkwinkel des Ausspeichergerätes ein Signal geliefert, welches die Anlage abschaltet oder die Umlaufgeschwindigkeit der Kratzerkette erhöht.

Für das Räumgerät kann mit Vorteil auch ein rotierender Räumbalken oder ein Räumrad verwendet werden, welcher bzw. welche mit spitzwinklig zur Radialen geneigten schaufel- oder pflugscharartigen Räumelementen versehen ist bzw. sind. Je nach Drehrichtung kann mit einem solchen Räumgerät das Schüttgut radial nach außen oder radial nach innen gefördert werden. Die Nabe des Räumrades wird zweckmäßig von dem obengenannten Drehglied der Drehverbindung gebildet.

Die Erfindung wird nachfolgend im Zusammenhang mit den in der Zeichnung dargestellten Ausführungsbeispielen näher erläutert. In der Zeichnung zeigen:

Fig. 1 im Vertikalschnitt durch ein Silo eine erfindungsgemäße Einrichtung zur Beschickung des Silos mit Schüttgut und zum Austrag des Schüttguts aus dem Silo;

Fig. 2 eine Draufsicht in Richtung des Pfeiles II der Fig. 1;

Fig. 3 die Einrichtung nach den Fig. 1 und 2 in einem Vertikalschnitt durch das Silo, um 90° gegenüber Fig. 1 gedreht;

Fig. 4 in der Schnittdarstellung der Fig. 3 eine geänderte Ausführungsform der Beschickungseinrichtung;

Fig. 5 ebenfalls im Vertikalschnitt durch ein Silo ein weiteres Ausführungsbeispiel der Erfindung;

Fig. 6 eine Draufsicht in Richtung des Pfeiles VI der Fig. 5;

Fig. 7 in Seitenansicht eine bevorzugte Ausführungsform einer am Drehglied angeordneten Verteiler- und Räumvorrichtung.

In der Zeichnung ist mit 1 ein rundes Silo bezeichnet, welches als Hochsilo auf Beinen 2 steht und als Großsilo für die Speicherung von körnigen Schüttgütern, wie z.B. Gips u.dgl., ausgelegt ist. Zur Beschickung des Silos 1 mit dem Schüttgut ist eine Beschickungsvorrichtung und zum Austrag des Schüttguts aus dem Silo 1 ist im Inneren desselben eine Ausspeichervorrichtung vorgesehen.

Die Schüttgut-Beschickungsvorrichtung weist einen an der Oberseite bzw. an der Decke 3 des Silos 1 stationär angeordneten Einspeicherförderer 4 auf, der zweckmäßig aus einem Einspeicherband besteht und dessen Abwurfende 5 oberhalb einer in der Mitte der Decke 3 befindlichen Öffnung 6 liegt. Im Inneren des Silos 1 befindet sich ein stabiler Brückenträger 7, der sich quer durch das Silo erstreckt und der im Silo mittels eines Hubwerks, welches hier aus mehreren Seilwinden 8 besteht, vertikal heb- und senkbar ist. Der Brückenträger 7 ist an seinen Enden in Vertikalführungen 9 drehschlüssig geführt, die sich an der Silowand 10 befinden und sich im wesentlichen über die gesamte Innenhöhe des Silos erstrecken. Die Vertikalführungen 9 bestehen aus Führungsschienen, die als Rippen an der Silowand 10 angeformt oder an der Silowand befestigt sind. Der Brückenträger 7 weist an seinen Enden jeweils einen Führungsschuh 11 auf, der mit einer Führungsnut 12 od.dgl. für den Eingriff der Vertikalführung 9 versehen ist. Von Bedeutung ist, daß der Brückenträger 7 über die Vertikalführungen 9 drehfest an der Silowand 10 abgestützt ist und zugleich mittels des Hubwerks 8 im Silo gehoben und gesenkt werden kann.

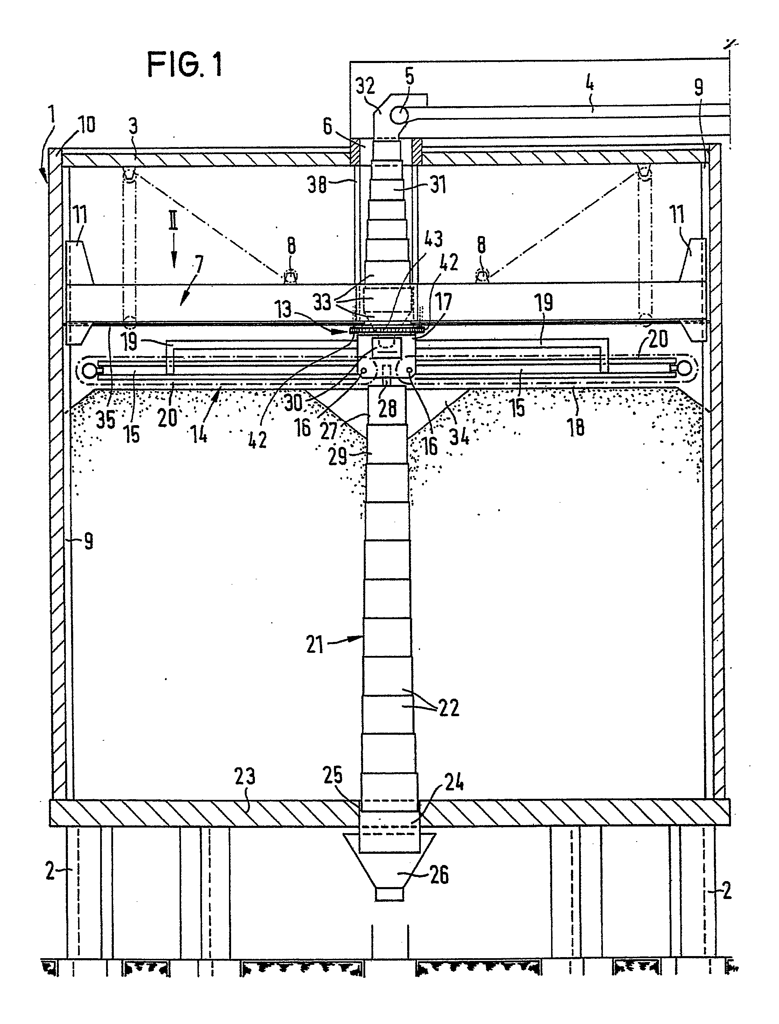

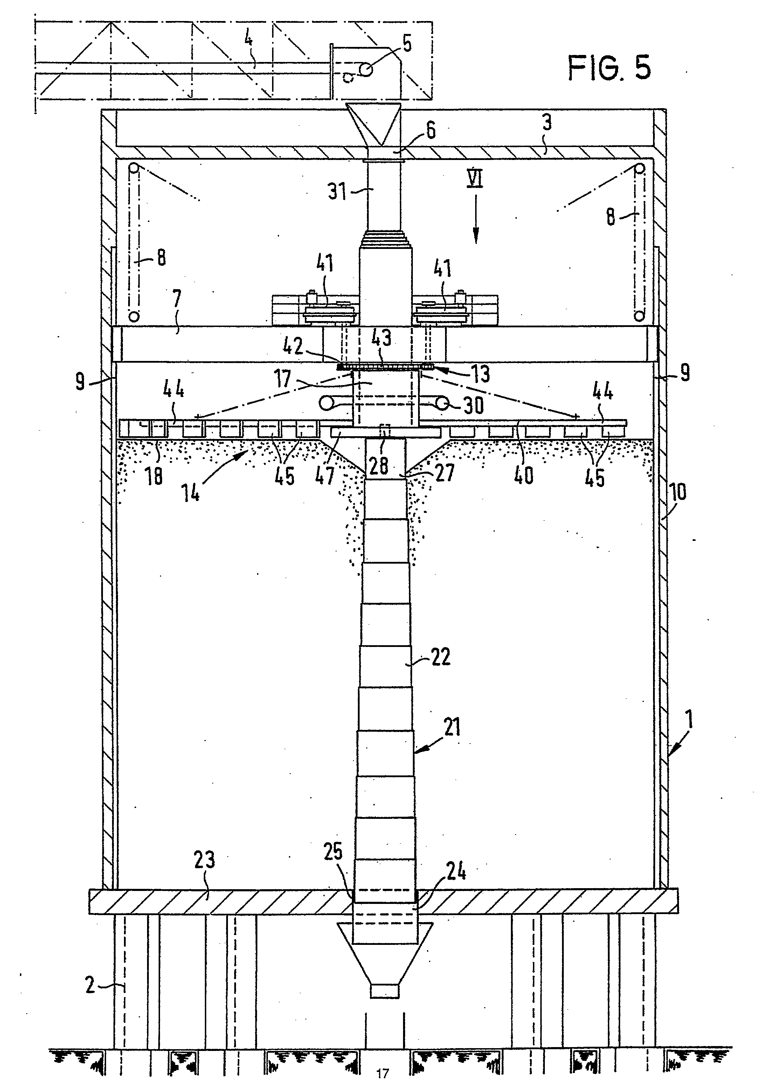

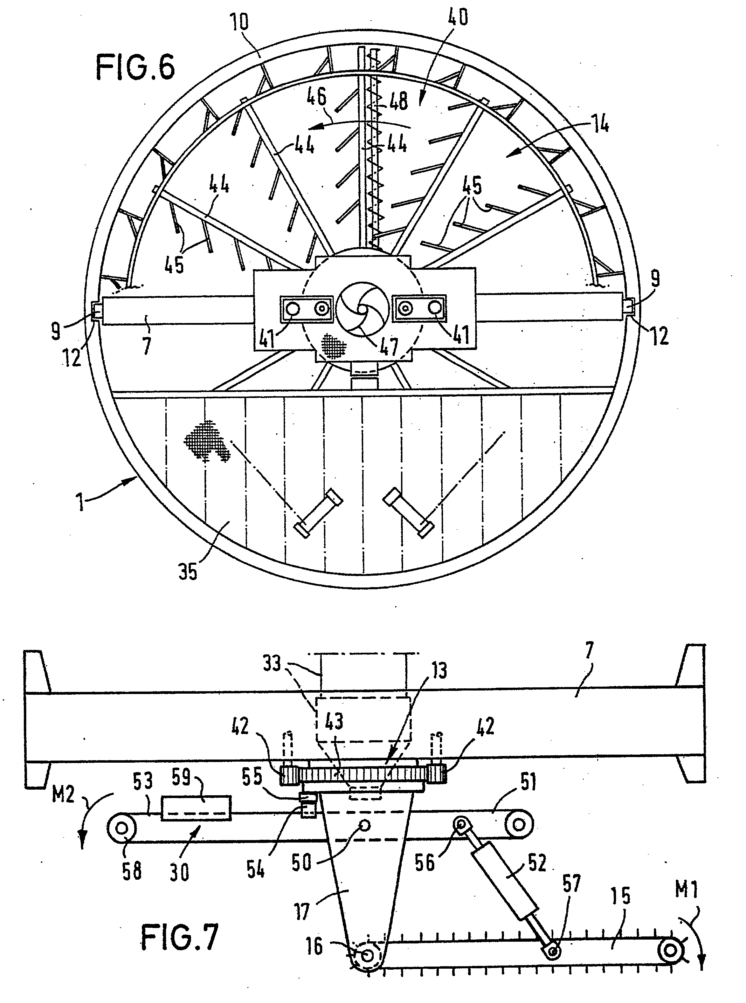

An der Unterseite des Brückenträgers 7 ist über eine Drehverbindung 13 mit vertikaler Drehachse ein Räumgerät 14 gelagert, welches bei den Ausführungsformen nach den Fig. 1 bis 4 aus zwei etwa höhengleich und in Fluchtlage zueinander angeordneten Kratzauslegern 15 besteht, die jeweils in einem Gelenk 16 begrenzt höhenverschwenkbar an einem Drehglied 17 gelagert sind, das über die Drehverbindung 13 mit dem Brückenträger 7 verbunden ist. Das Drehglied 17 ist mittels eines (nur in den Fig. 5 und 6 gezeigten) Drehantriebs 41, dessen angetriebene Ritzel 42 im Zahneingriff stehen mit einem Zahnkranz 43 am Drehglied 17, um die vertikale Siloachse drehbar, wobei die beiden Kratzausleger 15 Schwenkbewegungen über die Oberfläche 18 des im Silo befindlichen Schüttguthaufens ausführen. Jeder der beiden Kratzausleger 15 ist in Nähe des außenliegenden freien Endes durch einen Stützausleger 19 abgestützt, der mit dem Drehglied 17 starr verbunden ist. Die beiden Kratzausleger 15 weisen, wie üblich, jeweils ein mit Kratzern bestücktes endloses Kratzerkettenband auf, das in Fig. 1 lediglich strichpunktiert bei 20 angedeutet ist. Der Antrieb der Kratzerkettenbänder 20 ist reversierbar, so daß die Kratzerkettenbänder in beiden Umlaufrichtungen umlaufen können.

In der Silomitte befindet sich ein Abzugsschacht für die Abförderung des Schüttguts aus dem Silo 1. Der Abzugsschacht besteht aus einem zentral im Silo angeordneten Teleskop-Fallrohr 21, welches sich vom Siloboden 23 zum Brückenträger 7 hin verjüngt. Der im Durchmesser größte Rohrschuß 24 des Teleskop-Fallrohres 22 durchgreift eine zentrale Bodenöffnung 25, wobei unter seiner Schüttgutaustrittsöffnung ein Trichterauslaß 26 angeordnet ist. Statt dessen kann das Teleskop-Fallrohr 22 auch mit seinem unteren Austragsende über einem unter dem Siloboden 23 befindlichen Austragsförderer liegen.

Der im Durchmesser kleinste Rohrschuß 27 des Teleskop-Fallrohres 22 ist über eine Drehkupplung 28, die hier aus einer Drehzapfenverbindung besteht, mit dem Drehglied 17 verbunden. Es ist aber auch möglich, den kleinsten Rohrschuß 27 drehfest mit dem Drehglied 17 zu verbinden und zwischen diesem Rohrschuß 27 und dem nächstfolgenden Rohrschuß 29 eine Drehverbindung zu schaffen. Der obere Rohrschuß 27 weist eine Schüttgut-Eintragsöffnung auf, die von dem oben offenen Ende dieses Rohrschusses und ggf. von einer Mantelöffnung an diesem Rohrschuß gebildet ist. Das Teleskop-Fallrohr 22 ist so ausgebildet, daß es den Auf- und Abwärtsbewegungen des Brückenträgers 7 und des Räumgerätes 14 zu folgen vermag, jedoch an der Schwenkbewegung des Räumgerätes 14 um die Siloachse nicht teilnimmt.

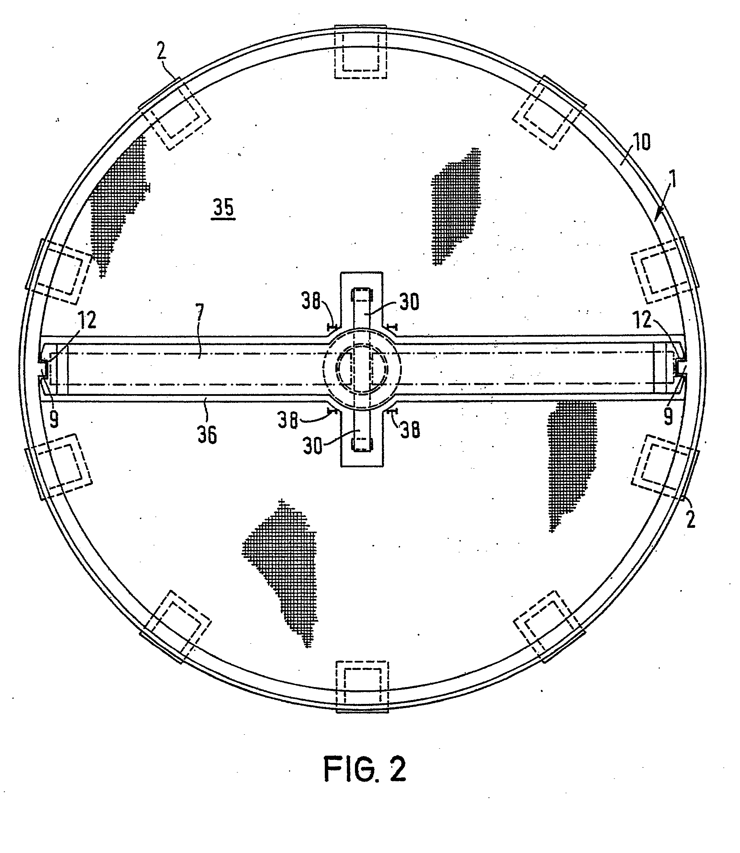

An dem Brückenträger 7 ist zugleich eine dem oben erwähnten Einspeicherförderer 4 nachgeschaltete Schüttgut-Verteilervorrichtung angeordnet. Diese besteht aus einem Verteilerband 30, das an dem Drehglied 17 angeordnet ist, gemäß den Fig. 1 bis 3 unter einem Winkel von etwa 90° zu den Kratzauslegern 15, wie vor allem Fig. 2 zeigt. Das Verteilerband 30 kann aus einem Gurtband, einem Plattenband oder einem sonstigen Abwurfband bestehen. Wie Fig. 1 zeigt, weist das Drehglied 17 eine das Verteilerband aufnehmende Innenöffnung auf. Zwischen dem Abwurfende 5 des oberen Einspeicherbandes 4 und dem Drehglied 17 ist ein Einspeicher-Teleskoprohr 31 angeordnet, welches das zugeführte Schüttgut etwa in der Mitte auf das Verteilerband 30 abwirft. Das Einspeicher-Teleskoprohr 31 ist mit seinem im Durchmesser kleinsten Rohrschuß 32 im Bereich des Abwurfendes 5 des Einspeicherförderers 4 festgelegt, während es mit seinen unteren, im Durchmesser größeren Rohrschüssen 33 eine zentrale Öffnung des Brückenträgers 7, der z.B. als Drehkranz ausgebildeten Drehverbindung 13 und des Drehgliedes 17 durchfaßt, wobei sein unteres Abwurfende über dem Verteilerband 30 liegt. Das Einspeicher-Teleskoprohr 31 ist ebenfalls so ausgebildet, daß es den Hubbewegungen des Brückenträgers 7 durch Aus- und Einfahren zu folgen vermag.

Beim Einspeichervorgang wird das über den Einspeicherförderer 4 und das Einspeicher-Teleskoprohr 31 zentral von oben zugeführte Schüttgut mit Hilfe des Verteilerbandes 30 in das Silo abgeworfen, wobei das Drehglied 17 und damit das Verteilerband eine Drehbewegung um die Siloachse ausführt, so daß das Schüttgut zu einer ringförmigen Aufhäufung in das Silo abgeworfen wird. Die Kratzerketten 20 der Kratzausleger 15 werden so angetrieben, daß sie das Schüttgut über die Oberfläche 18 des Schüttguthaufens hinweg radial nach außen befördern und gleichmäßig verteilen, so daß eine gleichmäßige Füllung des Silos bei ebener Oberfläche 18 des Schüttguthaufens erreicht wird. Während der Silobeschickung führt der Brückenträger 7 zusammen mit den Kratzauslegern 15 eine langsame Aufwärtsbewegung aus, was mit Hilfe des Hubwerks 8 bewerkstelligt wird. Da durch die Schüttgutverteilung eine kegelförmige Schüttgutaufhäufung im Silo vermieden wird, kann der Speicherraum des Silos günstig genutzt werden.

Beim Ausspeichern des Schüttguts aus dem Silo 1 werden die Kratzerketten 20 der beiden Kratzausleger 14 in entgegengesetzter Richtung so angetrieben, daß sie das Schüttgut über die Oberfläche 18 hinweg in Richtung auf die Silomitte befördern. Dabei wird zunächst der durch die Böschungsbildung verursachte Raum 34 um das obere Teleskoprohr 27 herum mit Schüttgut aufgefüllt. Sobald dies geschehen ist, gelangt das von den Kratzerketten zugeführte Schüttgut in die obere Öffnung des Rohrschusses 27. Das Schüttgut fällt durch das Teleskop-Fallrohr 21 nach unten und kann unterhalb des Silobodens 23 abgezogen werden. Während des Schüttgutaustrags führt der Brückenträger 7 mit dem Räumgerät 14 eine kontinuierliche Abwärtsbewegung aus, die beendet ist, wenn das Räumgerät den Siloboden erreicht. Wie erwähnt, können die Teleskoprohre 21 und 31 den Auf- und Abwärtsbewegungen folgen. Die Betriebskräfte bei der Schüttgutbeschickung und beim Schüttgutaustrag werden über den Brückenträger 7 und die Vertikalführungen 9 auf die Silowand 10 abgesetzt. Das Teleskop-Fallrohr 21 ist von den Betriebskräften nicht belastet und dient auch nicht als Drehführung für das um die Siloachse schwenkbare Räumgerät 14. Über den Brückenträger 7 ist eine gute Zugänglichkeit der im Silo befindlichen Vorrichtungen möglich. Es empfiehlt sich, im oberen Bereich des Silos eine feste Bühne 35 vorzusehen, die, wie in Fig. 2, eine Durchbrechung 36 aufweist, die der Umrißform des Brückenträgers 7 und des quer hierzu ausladenden Verteilerbandes 30 angepaßt ist, so daß der Brückenträger 7 zusammen mit den von ihm getragenen Bauteilen durch die Öffnung 36 der Bühne 35 hindurchgeführt werden kann, um z.B. von der Bühne aus Reparatur- und Wartungsarbeiten durchzuführen.

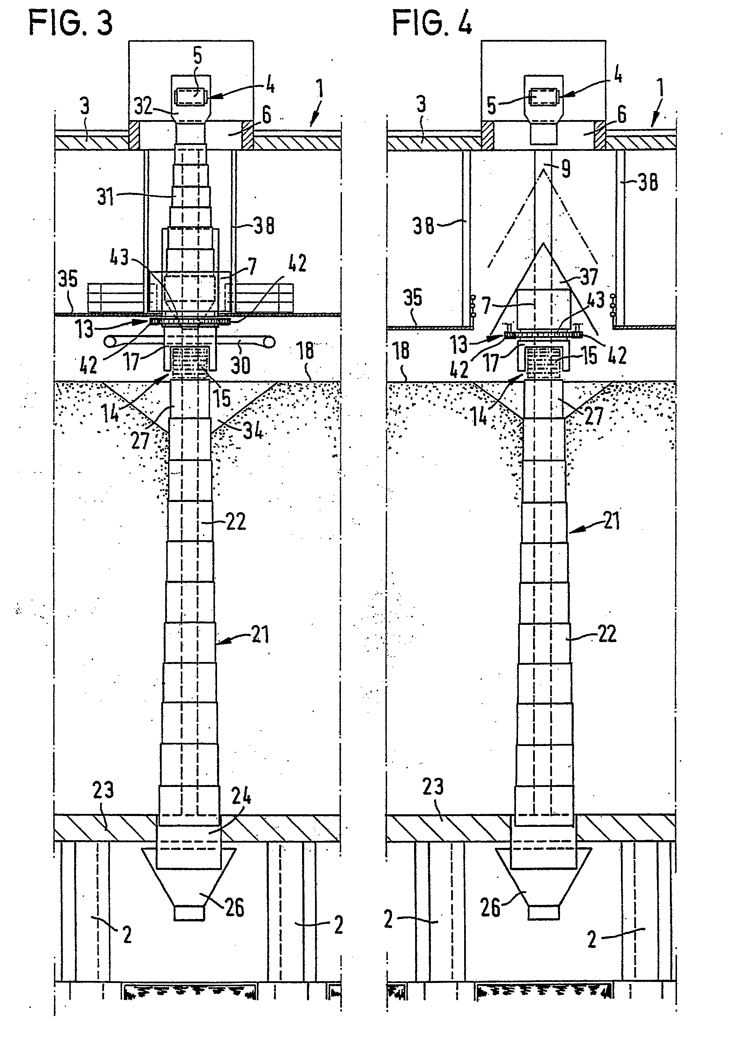

Die Ausführungsform nach Fig. 4 unterscheidet sich von derjenigen nach den Fig. 1 bis 3 lediglich dadurch, daß die dem Einspeicherförderer 4 nachgeschaltete Schüttgut-Verteilervorrichtung aus einem dachförmigen Schrägabweiser 37 besteht, der an dem Brückenträger 7 befestigt ist und diesen übergreift, so daß das vom Einspeicherförderer 4 in das Silo 1 abgeworfene Schüttgut über den Abweiser 37 außermittig auf den Schüttguthaufen geleitet wird. Das Verteilerband 30 und das Einspeicher-Teleskoprohr 31 können hierbei entfallen. Die vorgenannte Bühne 35 ist im Umfangsbereich mit der Silowand 10 und im Innenbereich über Zugglieder 38 mit der Decke 3 verbunden.

Es versteht sich, daß die Hubgeschwindigkeit des Brückenträgers 7 beim Schüttgutaustrag auf die Fördergeschwindigkeit des Räumgerätes 14 abgestimmt sein muß. Falls, wie insbesondere bei verfestigtem Schüttgut, eine Überlastung der Kratzausleger 15 eintritt, so können diese in ihren Gelenken 16 geringfügig nach oben verschwenken. Die Kupplung der Stützausleger 19 mit den Kratzauslegern 15 ist z.B. über Bolzen-Langlochverbindungen od.dgl. so ausgebildet, daß diese Schwenkbewegungen um kleine Winkel von z.B. 5° möglich sind. Bei Erreichen eines vorbestimmten Schwenkwinkels wird z.B. über einen Winkelgeber oder Schalter u. dgl. ein Signal ausgelöst, welches entweder die gesamte Einrichtung stillsetzt oder die Hubgeschwindigkeit des Brückenträgers vermindert.

Die Ausführungsform nach den Fig. 5 und 6 unterscheidet sich von derjenigen nach den Fig. 1 bis 3 im wesentlichen nur dadurch, daß anstelle des von den Kratzauslegern 15 gebildeten Räumgerätes 14 ein Räumrad 40 vorgesehen ist, welches um die vertikale Siloachse drehbar ist. Das Räumrad 40 ist über das Drehglied 17 und die Drehverbindung 13 drehbar mit dem Brückenträger 7 verbunden, der sich endseitig in den Vertikalführungen 9 an der Silowand 10 führt. Der Drehantrieb 41 des Räumrades 40 befindet sich am Brückenträger 7. Der Antrieb erfolgt über Ritzel 42, die mit einem Zahnkranz 43 des Drehgliedes 17 im Eingriff stehen.

Das Räumrad 40 besteht aus einem Speichenrad, dessen Nabe von dem Drehglied 17 gebildet wird. An den radialen Speichen 44 sind jeweils in radialem Abstand zueinander aus feststehenden Leitblechen bestehende pflugscharartige Räumorgane 45 angeordnet, die, wie die Draufsicht der Fig. 6 zeigt, unter einem spitzen Winkel zur Radialrichtung derart ausgestellt und an den aufeinanderfolgenden Speichen 44 so zueinander radial versetzt sind, daß bei der Umdrehung des Räumrades 40 in Pfeilrichtung 46 das Schüttgut von außen nach innen in Richtung auf das Teleskop-Fallrohr 22 gefördert wird. Bei Änderung der Drehrichtung des Räumrades 40 wird das Schüttgut dagegen radial von innen nach außen in Richtung auf die Silowand 10 befördert, so daß das von oben auf den Schüttguthaufen abgeworfene Schüttgut mit Hilfe des Räumrades über die Querschnittsfläche des Silos verteilt werden kann. Im Zentrum des Räumrades befinden sich oberhalb des Teleskop-Fallrohres 22 sichelförmige Leitschaufeln 47, die die Überleitung des vom Räumrad 40 nach innen beförderten Schüttguts in das Teleskop-Fallrohr 21 begünstigen.

Wie Fig. 6 erkennen läßt, kann die Bühne 35 hier so ausgebildet sein, daß sie lediglich ein Segment des kreisrunden Silos überdeckt, und zwar außerhalb des Hubbereichs des Brückenträgers 7. Bei stärker verfestigtem Schüttgut empfiehlt es sich, dem Räumgerät eine oder mehrere angetriebene Fräsen zuzuordnen, die das Schüttgut an der Oberfläche 18 auflockern. In Fig. 6 ist bei 48 eine solche angetriebene Fräse angedeutet, die sich hier an der Speiche 44 des Räumrades 40 befindet.

Fig. 7 zeigt in einer Teilansicht eine bevorzugte Ausführungsform der am Drehglied 17 angeordneten Räum- und Verteilervorrichtungen. Abweichend von der Ausführungsform nach den Fig. 1 bis 3 ist hier am Drehglied 17 nur ein einziger Kratzausleger 15 gelagert. Der Abwurfförderer 30, der das über das Einspeicher-Teleskoprohr 31 zugeführte Schüttgut in das Silo 1 abwirft und vorzugsweise aus einem Verteilerband der genannten Art besteht, ist entgegengerichtet zum Kratzausleger 15 so am Drehglied 17 gelagert, daß er das Gewicht des Kratzauslegers 15 zumindest teilweise ausgleicht, was im Hinblick auf die Belastungsverhältnisse am Drehglied 17, an der Drehverbindung 13, am Brückenträger 7 und an den Führungsschienen 9 vorteilhaft ist.

Vorzugsweise ist der Abwurfförderer 30 oberhalb des Gelenks 16 des Kratzauslegers 15 in einem Schwenklager 50, dessen horizontale Gelenkachse parallel zur Achse des Gelenks 16 verläuft, nach Art eines zweiarmigen Hebels schwenkbar gelagert. Der gleichgerichtet zu dem Kratzausleger 15 weisende Abschnitt (Hebelarm) 51 des Abwurfförderers 30 ist über ein druck- und zugfestes Koppelglied 52 mit dem darunterliegenden Kratzausleger 15 gekoppelt. Die Anschlußgelenke des Koppelgliedes 52 sind mit 56 und 57 bezeichnet. Der auf der anderen Seite des Schwenklagers 50 liegende Abschnitt (Hebelarm) 53 stützt sich mit einem Anschlag 54 an einem Gegenanschlag 55 des Drehgliedes 17 ab. Die Anordnung ist hier so getroffen, daß der Abwurfförderer 30 das Gewicht des Kratzauslegers 15 nur teilweise ausgleicht. Entsprechend wird im Ausspeicherbetrieb das Lastmoment M1 des Kratzauslegers 15 durch das vom Abwurfförderer 30 ausgeübte Gegenmoment M2 nur teilweise ausgeglichen. Die Differenz der beiden Momente M1 und M2 dient zum Niederhalten des Kratzauslegers 15 auf dem Speichergut an der Oberfläche 18 des Schüttguthaufens. Wird bei der Ausspeicherarbeit der sich mit dem Brückenträger 7 absenkende Kratzausleger 15 z.B. bei zu hartem bzw. zu stark verfestigtem Schüttgut unter Verschwenken im Gelenk 16 nach oben hochgedrückt, so wird über das Koppelglied 52 der Abwurfförderer 30 verschwenkt, so daß sich sein Anschlag 54 von dem Gegenanschlag 55 des Drehgliedes 17 abhebt. Die Relativbewegung der beiden Anschläge 54, 55, über die im Normalbetrieb das Differenzmoment M1 - M2 abgestützt wird, läßt sich mit Hilfe eines einfachen Tast- oder Schaltorgans in ein z.B. elektrisches Schaltsignal umwandeln, das die Absenkbewegung des Brückenträgers 7 durch entsprechende Steuerung des Hubwerks 8 unterbricht oder in der Geschwindigkeit herabsetzt.

Das Koppelglied 52 kann auch in seiner Länge einstellbar ausgebildet sein, um den Kratzausleger 15 in eine von der Horizontalen abweichende Schwenkposition einstellen zu können. Für das Koppelglied 52 kann ein druck- und zugfester Lenker, im Falle der Längeneinstellung ein hydraulischer Zylinder, ein Stellmotor mit Gewindespindel od.dgl. verwendet werden.

Bei der bevorzugten Ausführungsform nach Fig. 7 wird das einzuspeichernde Schüttgut am freien Ende 58 des Abwurfförderers 30 in das Silo abgeworfen, vorzugsweise in Nähe der Silowand, so daß das Schüttgut von dem zur Silomitte hin fördernden Kratzausleger über den Siloquerschnitt verteilt werden kann. Der Kratzausleger braucht hierbei in seiner Arbeitsrichtung nicht reversiert zu werden. Es empfiehlt sich, am Abwurfförderer 30 ein Zusatz-Gegengewicht 59 oder eine Halterung für ein solches Zusatz-Gegengewicht anzuordnen, wodurch sich das oben erwähnte Differenzmoment M1 - M2 in Anpassung an das jeweilige Schüttgut einstellen läßt. Vorzugsweise besteht die Vorrichtung 59 aus einem Gewichtskasten, der ein Ballastgewicht aufnimmt.

Bei den in den Fig. 2 und 6 gezeigten Ausführungsbeispielen ist der Brückenträger 7 so ausgebildet, daß er sich in Durchmesserrichtung quer durch das Silo erstreckt und an seinen beiden gegenüberliegenden Enden über einen Führungsschuh 11 an den Vertikalführungen 9 der Silowand geführt ist. Es versteht sich, daß der Brückenträger 7 auch aus einem kreuz- oder sternförmigen Tragrahmen bestehen kann. Bei allen in der Zeichnung dargestellten Ausführungsformen sind die Räumgeräte 14 ersichtlich so angeordnet, daß sie mit ihrem Abwurfende oberhalb des oben offenen Endes des Teleskop-Fallrohrs 21 angeordnet sind, wo das Schüttgut von oben in das Teleskop-Fallrohr gefördert wird. Das Teleskop-Fallrohr steht bei gefülltem Silo im Schüttguthaufen. Bei der Ausspeicherarbeit wird der Einschub des Teleskop-Fallrohrs 21 durch das Auflagergewicht des Brückenträgers 7 und der hiermit verbundenen Vorrichtungen erzwungen. Es kann sich empfehlen, die Einzelrohre 22 des Teleskop-Fallrohrs 21 außenseitig mit einer die Anhaftung des Schüttgutes unterdrückenden Oberflächenbeschichtung, vorzugsweise aus verschleißfestem Kunststoffmaterial mit guten Gleiteigenschaften, wie vor allem Teflon od.dgl., zu versehen.

## Patentansprüche

1. Einrichtung zur Schüttgutförderung in Silos, mit einer das einzuspeichernde Schüttgut in das Silo (1) abwerfenden Beschickungsvorrichtung (4), mit einer das Schüttgut aus dem Silo (1) ausspeichernden Ausspeichervorrichtung, die ein auf der Oberfläche (18) des Schüttguthaufens arbeitendes, mittels eines Drehantriebs (41) um die Siloachse drehbares Räumgerät (14) aufweist, das über ein mittig im Silo angeordnetes Drehglied (17) an einem mittels eines Hubwerks (8) im Silo (1) heb- und senkbaren, an einer Vertikalführung (9) drehschlüssig geführten Führungsglied gelagert ist, und mit einem im Silo (1) angeordneten Teleskop-Fallrohr (21), das am oberen Ende mit einem Schüttgut-Einlauf für das vom Räumgerät (14) zugeförderte Schüttgut versehen ist und mit dem Führungsglied (7) und dem Räumgerät (14) so gekoppelt ist, daß es deren Hubbewegungen durch teleskopartiges Ein- und Ausschieben folgt, gekennzeichnet durch folgende Merkmale:
- Das Führungsglied für das Teleskop-Fallrohr (21) besteht aus einem sich quer durch das Silo (1) erstreckenden Brückenträger (7), der sich an seinen Enden an den an der Silowand angeordneten Vertikalführungen (9) drehschlüssig führt;
- der Drehantrieb (41) ist am Brückenträger (7) angeordnet und treibt das an der Unterseite des Brückenträgers (7) angeordnete Räumgerät (14) über das Drehglied (17) an.

2. Einrichtung nach Anspruch 1, dadurch gekennzeichnet, daß der Brückenträger (7) eine Schüttgut-Verteilervorrichtung (30, 37) trägt und daß zwischen dem Abwurfende (5) eines an der Oberseite des Silos (1) angeordneten Einspeicherförderers (4) und dem Brückenträger (7) ein an seinem unteren Ende mit dem Brückenträger (7) verbundenes zentrales Einspeicher-Teleskoprohr (31) angeordnet ist.

3. Einrichtung nach Anspruch 1, dadurch gekennzeichnet, daß das Teleskop-Fallrohr (21) am Drehglied (17) angeschlossen ist.

4. Einrichtung nach Anspruch 3, dadurch gekennzeichnet, daß das Teleskop-Fallrohr (21) über eine Drehkupplung (28) mit dem Drehglied (17) des Räumgerätes (14) verbunden ist.

5. Einrichtung nach einem der Ansprüche 1 bis 4, dadurch gekennzeichnet, daß an dem Drehglied (17) unterhalb des Austragsendes des Einspeicher-Teleskoprohres (31) die Schüttgut-Verteilervorrichtung angeordnet ist.

6. Einrichtung nach Anspruch 5, dadurch gekennzeichnet, daß die Schüttgut-Verteilervorrichtung aus einem am Drehglied (17) angeordneten Verteilerband (30) od.dgl., z.B. einem Gurt- oder Plattenband, besteht.

7. Einrichtung nach einem der Ansprüche 1 bis 6, dadurch gekennzeichnet, daß das Räumgerät (14) aus mindestens einem Kratzausleger (15) besteht, der an dem über die Drehverbindung (13) mit dem Brückenträger (7) verbundenen Drehglied (17) angeordnet ist.

8. Einrichtung nach Anspruch 7, dadurch gekennzeichnet, daß an dem Drehglied (17) zwei diametral einander gegenüberliegende Kratzausleger (15) angeordnet sind.

9. Einrichtung nach Anspruch 7 oder 8, dadurch gekennzeichnet, daß der bzw. die Kratzausleger (15) in einem Gelenk (16) begrenzt höhenverschwenkbar mit dem Drehglied (17) verbunden ist bzw. sind und daß eine Schaltvorrichtung od.dgl. vorgesehen ist, die bei einem vorgegebenen maximalen Schwenkwinkel des Kratzauslegers ein Signal liefert.

10. Einrichtung nach einem der Ansprüche 2 bis 9, dadurch gekennzeichnet, daß der Abwurfförderer (30) als ein das Gewicht des Kratzauslegers (15) zumindest teilweise ausgleichendes Gegengewicht am Drehglied (17) angeordnet ist.

11. Einrichtung nach Anspruch 10, dadurch gekennzeichnet, daß der Abwurfförderer (30), welcher das Kratzausleger-Gewicht nur teilweise ausgleicht, oberhalb des Gelenks (16) des Kratzauslegers (15) in einem Schwenklager (50) mit zur Schwenkachse des Kratzauslegers paralleler Gelenkachse nach Art eines zweiarmigen Hebels am Drehglied (17) gelagert ist, und daß der Kratzausleger (15) über ein Koppelglied (52) mit dem über ihm liegenden Abschnitt (51) des Abwurfförderers (30) gekoppelt ist, während der auf der anderen Seite des Schwenklagers (50) liegende Abschnitt (53) des Abwurfförderers (30) mit einem Anschlag (54) gegen einen Gegenanschlag (55) des Drehgliedes (17) abgestützt ist.

12. Einrichtung nach Anspruch 11, dadurch gekennzeichnet, daß das druck- und zugfeste Koppelglied (52) längeneinstellbar ist.

13. Einrichtung nach einem der Ansprüche 10 bis 12, dadurch gekennzeichnet, daß die genannte Schaltvorrichtung ein Tast- oder Schaltorgan od.dgl. aufweist, welches beim Abheben des Anschlags (54) vom Gegenanschlag (55) das genannte Signal auslöst, das die Absenkbewegung des Brückenträgers (7) unterbricht oder vermindert.

14. Einrichtung nach einem der Ansprüche 1 bis 6, dadurch gekennzeichnet, daß das Räumgerät (14) aus einem Räumbalken, Räumrad (40) od.dgl. besteht, welcher bzw. welches mit spitzwinklig zur Radialen geneigten, pflugschafartigen Räumelementen (45) versehen ist.

15. Einrichtung nach einem der Ansprüche 1 bis 9, dadurch gekennzeichnet, daß der Schüttgut-Einlauf von dem oben offenen Ende des Teleskop-Fallrohrs (21) gebildet ist und das Räumgerät (14) mit seinem Abwurfende oberhalb des oben offenen Endes des Teleskop-Fallrohrs angeordnet ist.

16. Einrichtung nach einem der Ansprüche 1 bis 15, dadurch gekennzeichnet, daß der Brückenträger (7) an seinen Enden Gleitschuhe (11) trägt, mit denen er an die Vertikalführungen (9) bildenden, an der Silowand angeordneten Führungsschienen geführt ist.

17. Einrichtung nach einem der Ansprüche 1 bis 16, dadurch gekennzeichnet, daß die Rohre (22) des Teleskop-Fallrohrs (21) mit einer die Anhaftung des Schüttgutes unterdrückenden Beschichtung, vorzugsweise aus verschleißfestem Kunststoffmaterial mit guten Gleiteigenschaften, wie vor allem Teflon od.dgl., versehen sind.

## Claims

1. Apparatus for conveying fluent solid material into silos, comprising a feeding device (4) delivering the fluent solid material to be stored into the silo (1), a discharging device which discharges the fluent solid material from the silo (1) and has a clearing implement (14) which works on the surface (18) of the heap of fluent solid material, can be rotated about the silo axis by means of a rotary drive (41) and, via a rotary member (17) arranged centrally in the silo, is mounted on a guide member which can be raised and lowered in the silo (1) by means of a lifting mechanism (8) and is guided rotationally fast on a vertical guide (9), and a telescopic gravity tube (21) which is arranged in the silo (1), is provided at the upper end with an inlet for the fluent solid material which has been conveyed by the clearing implement (14) and is coupled to the guide member (7) and the clearing implement (14) in such a way that it follows their lifting movements by telescopic retraction and extension, characterized by the following features:
- the guide member for the telescopic gravity tube (21) consists of a bridge grider (7) which extends transversely through the silo (1) and is guided rotationally fast at its ends on the vertical guides (9) arranged on the silo wall;
- the rotary drive (41) is arranged on the bridge girder (7) and, via the rotary member (17), drives the clearing implement (14) arranged on the underside of the bridge girder (7).

2. Apparatus according to claim 1, characterized in that the bridge girder (7) supports a distribution device (30, 37) for the fluent solid material, and that a telescopic feeding tube (31), connected centrally at its lower end to the bridge girder (7), is arranged between the delivery end (5) of a feeding conveyor (4), arranged on the upper side of the silo (1), and the bridge girder (7).

3. Apparatus according to claim 1, characterized in that the telescopic gravity tube (21) is connected to the rotary member (17).

4. Apparatus according to claim 3, characterized in that the telescopic gravity tube (21) is connected to the rotary member (17) of the clearing implement (14), via a rotary coupling (28).

5. Apparatus according to any of claims 1 to 4, characterized in that the distribution device for the fluent solid material is arranged on the rotary member (17) beneath the discharge end of the telescopic feeding tube (31).

6. Apparatus according to claim 5, characterized in that the distribution device for the fluent solid material consists of a distribution conveyor (30) or the like, e.g. a belt or apron conveyor, arranged on the rotary member (17).

7. Apparatus according to any of claims 1 to 6, characterized in that the clearing implement (14) consists of at least one scraper boom (15) which is arranged on the rotary member (17) connected via the rotary connection (13) to the bridge girder (7).

8. Apparatus according to claim 7, characterized in that two scraper booms (15) lying diametrically opposite one another are arranged on the rotary member (17).

9. Apparatus according to claim 7 or 8, characterized in that the scraper boom or scraper booms (15) is/are connected to the rotary member (17) in such a way as to be vertically pivotable to a limited extent in an articulation (16), and that a switching device or the like is provided which delivers a signal at a predetermined maximum pivot of the scraper boom.

10. Apparatus according to any of claims 2 to 9, characterized in that the delivery cenveyor (30) is arranged on the rotary member (17) as a counterweight at least partly compensating the weight of the scraper boom (15).

11. Apparatus according to claim 10, characterized in that the delivery conveyor (30), which only partly compensates the scraper boom weight, is mounted lik a double-arm lever on the rotary member (17) above the articulation (16) of the scraper boom (15) in a pivot bearing (50) having an articulation axis parallel to the pivot axis of the scraper boom, and that the scraper boom (15) is coupled on the section (51) of the delivery conveyer (30) lying above it via a coupling member (52), whereas the section (53) of the delivery conveyor (30) lying on the other side of the pivot bearing (50) is supported by a stop (54) against a counterstop (55) of the rotary member (17).

12. Apparatus according to claim 11, characterized in that the coupling member (52), which is resistant to compression and tension, is adjustable in length.

13. Apparatus according to any of claims 10 to 12, characterized in that the said switching device has a scanning or switching member or the like which, when the stop (54) is lifted clear of the counterstop (55), releases the said signal, which interrupts or reduces the lowering movement of the bridge girder (7).

14. Apparatus according to any of claims 1 to 6, characterized in that the clearing implement (14) consists of a clearing beam, clearing wheel (40) or the like which is provided with ploughshare-like clearing elements (45) inclined at an acute angle to the radial line.

15. Apparatus according to any of claims 1 to 9, characterized in that the inlet for the fluent solid material is formed by the end of the telescopic gravity tube (21) open at the top, and the clearing implement (14) is arranged with its delivery end above the end of the telescopic gravity tube open at the top.

16. Apparatus according to any of claims 1 to 15, characterized in that the bridge girder (7), at its ends, carries sliding shoes (11) with which it is guided on the guide rails forming the vertical guides (9) arranged on the silo wall.

17. Apparatus according to any of claims 1 to 16, characterized in that the tubes (22) of the telescopic gravity tube (21) are provided with a coating which inhibits adhesion of the fluent solid material and preferably consists of a wear-resistant plastic material having good sliding properties, such as, in particular, teflon or the like.

## Revendications

1. Dispositif de manutention de produit en vrac dans des silos, avec un dispositif de chargement (4) projetant dans le silo (1) le produit en vrac à stocker, avec un dispositif d'extraction extrayant le produit en vrac hors du silo (1), dispositif qui présente un appareil de raclage (14), travaillant sur la surface (18) du tas de produit en vrac, tournant autour de l'axe du silo au moyen d'un entrainement tournant (41), appareil monté par un élément tournant (17) disposé au centre dans le silo, sur un élément de guidage lié en rotation à un guidage vertical (9), relevable et abaissable dans le silo (1) au moyen d'un dispositif de levage (8) et avec un tube de descente télescopique (21) disposé dans le silo (1), qui est pourvu à l'extrémité supérieure d'une entrée de produit en vrac pour le produit en vrac alimenté depuis l'appareil de reclage (14) et est accouplé à l'élément de guidage et à l'appareil de raclage (14) de sorte qu'il suit ses mouvements de course par une rétraction et une extraction de type téléscopique, caractérisé par les caractéristiques suivantes:
- L'organe de guidage pour le tube de descente télescopique (21) se compose d'une poutre de pont (7) s'étendant transversalement à travers le silo (1), poutre qui guide en rotation à ses extrémités sur des guidages verticaux (9) disposés sur la paroi du silo;
- L'entraînement en rotation (41) est disposé sur la poutre de pont (7) et entraîne par l'élément de rotation (17) l'appareil de raclage (14) disposé sur le côté inférieur de la poutre de pont (7).

2. Dispositif selon la revendication 1, caractérisé en ce que la poutre de pont (7) porte un dispositif de répartition de produit en vrac (30, 37) et qu'un tube télescopique (31) de stockage central relié à son extrémité inférieure à la poutre de pont (7) est disposé entre l'extrémité d'éjection (5) d'un transporteur de stockage (4) disposé sur le côté supérieur du silo et la poutre de pont (7).

3. Dispositif selon la revendication 1, caractérisé en ce que le tube de descente télescopique (21) est raccordé à l'élément tournant (17).

4. Dispositif selon la revendication 3, caractérisé en ce que le tube de descente télescopique (21) est relié par un accouplement tournant (28) à l'élément tournant (17) de l'appareil de raclage (14).

5. Dispositif selon l'une des revendications 1 à 4, caractérisé en ce que le dispositif de répartition de produit en vrac est disposé sur l'élément tournant (17), au-dessous de l'éxtrémite de déversement du tube télescopique de stockage (31).

6. Dispositif selon la revendication 5, caractérisé en ce que le dispositif de répartition de produit en vrac se compose d'une bande de répartition (30) ou similaire, par exemple une sangle ou un ruban à plaques, disposé sur l'élément tournant (17).

7. Dispositif selon l'une des revendications 1 à 6, caractérisé en ce que l'appareil de raclage (14) se compose au moins d'un bras à raclettes (15), qui est disposé sur l'élément tournant (17) relié par la liaison tournante (13) à la poutre de pont (7).

8. Dispositif selon la revendication 7, caractérisé en ce que deux bras à raclettes (15) diamétralement opposés l'un par rapport à l'autre sont disposés sur l'élément tournant (17).

9. Dispositif selon la revendication 7 ou 8, caractérisé en ce que le, respectivement les bras à raclettes (15) est, respectivement sont reliés à l'élément tournant (17), en étant susceptibles de basculer en hauteur dans certaines limites dans une articulation (16), et qu'un dispositif de brachement, ou similaire, est prévu et délivre un signal pour un angle de basculement maximal prédéterminé du bras à raclettes.

10. Dispositif selon l'une des revendications 2 à 9, caractérisé en ce que transporteur de déversement (30) est disposé sur l'élément tournant (17) sous forme de contre-poids équilibrant au moins partiellement le poids du bras raclettes (15).

11. Dispositif selon la revendication 10, caractérisé en ce que le transporteur de déversement (30) qui ne compense que partiellement le poids des bras à raclettes est monté sur l'élément tournant (17) comme un levier à deux bras, au-dessus de l'articulation (16) du bras à raclettes (15), dans un palier pivotant (50) ayant un axe de pivotement parallele à l'axe de pivotement du bras à raclettes, et que le bras à raclettes (15) est accouplé par un élément d'accouplement (52) à la section (51) du transporteur de déversement (30) qui se trouve au-dessus de lui, alors que la section (53) du transporteur de déversement (30) qui est située de l'autre côté du palier pivotant (50) est appuyée avec une butée (54) sont une contre-butée (55) de l'élément tournant (17).

12. Dispositif selon la revendication 11, caractérisé en ce que l'élément d'accouplement (52) résistant à la pression et à la traction est réglable en longueur.

13. Dispositif selon l'une des revendications 10 à 12, caractérisé en ce que le dispositif de branchement évoqué présente un organe de contact ou d'interruption, ou similaire, qui déclenche le signal évoqué lors de l'enlèvement de la butée (54) vis-à-vis de la contre-butée, signal qui interrompt ou diminue le mouvement de descente de la poutre de pont (7).

14. Dispositif selon l'une des revendications 1 à 6, caractérisé en ce que l'appareil de raclage (14) se compose d'une poutre de raclage, d'une roue de raclage (40) ou similaire, qui est pourvue d'éléments de raclage (45) d'un genre de soc de charrue, faisant un angle aigu par rapport aux directions radiales.

15. Dispositif selon l'une des revendications 1 à 9, caractérisé en ce que l'entrée de produit en vrac est formée par l'extrémité ouverte supérieure du tube de descente télescopique (21) et que l'appareil de raclage (14) est disposé avec son extrémité de déversement au-dessus de l'éxtrémité supérieure ouverte du tube de descente télescopique.

16. Dispositif selon l'une des revendications 1 à 15, caractérisé en ce que la poutre de pont (7) porte des patins de glissement (11) à ses extrémités, avec lesquels elle est guidée sur les glissières de guidage disposées sur la paroi de silo, formant les guidages verticaux (9).

17. Dispositif selon l'une des revendications 1 à 16, caractérisé en ce que les tubes (22) du tube de descente télescopique (21) sont pourvus d'un revêtement diminuant l'adhérence du produit en vrac, de préférence composé d'un matériau plastique résistant à l'usure, ayant de bonnes propriétés de glissement, tel que surtout le téflon ou similaire.

# FIG.1

**FIG. 2**

# FIG. 3

# FIG. 4

EP 0 200 000 B1

FIG. 5

FIG.6

10  40
46  48
44  44  14
44
45
45
45
9
9  12
12
7
41  41
47
1
35

FIG.7

33  13  7
43
42  42
53  59  55  51
M2
58  30  54  50  56  52
57  15  M1
17
16